# EUROPEAN PATENT SPECIFICATION

(11) **EP 3 116 264 B1**
(45) Date of publication and mention of the grant of the patent: **26.09.2018**
(21) Application number: 16177395.7
(22) Date of filing: 30.06.2016
(51) Int. Cl.: H04W 40/24

(54) **AUDIO STREAMING OVER MULTIPLE HOP WIRELESS NETWORK**
AUDIOSTREAMING ÜBER MULTI-HOP-DRAHTLOSNETZWERK
AUDIO EN CONTINU SUR UN RÉSEAU SANS FIL À SAUTS MULTIPLES

(30) Priority: 09.07.2015 US 201514795607
(43) Date of publication of application: 11.01.2017
(73) Proprietor: Honeywell International Inc., Morris Plains, NJ 07950 (US)
(72) Inventor: CHANDRASHEKAR, Madhu T., Morris Plains, NJ New Jersey 07950 (US); MANDIGANAL, Santosh Mallikarjuna, Morris Plains, NJ New Jersey 07950 (US)
(74) Representative: Houghton, Mark Phillip

(56) References cited:
- EP-A2- 2 779 751
- US-A1- 2006 215 583
- US-A1- 2009 175 216
- US-B1- 7 787 427

## Description

### Background

Public address (PA) and voice annunciation (VA) systems stream live audio announcements across a large number of speaker nodes distributed in a building. Speaker nodes are triggered to start announcements for emergency evacuation, mass notifications, and office announcements, or to play background music. All speaker nodes are wire connected with a centralized monitoring and announcement panel (voice control panel).

Unfortunately, speaker nodes deployed today require multiple pairs of wires from a central panel to both power the speaker nodes and to receive audio data. This makes the network deployment slow and costly. The maintenance cost of such a system is high as large lengths of wires that are required to cover the building have to be monitored and replaced.

In some systems, selected speaker nodes can receive audio wirelessly using Bluetooth or Wi-Fi.
United States Patent Application Publication No. US 20090175216 describes a method for optimizing wireless communications in a mesh network, using status messages.

### Summary

The present invention is defined by the appended claims.

A method of assigning nodes and time slots in a wireless audio node mesh network includes transmitting via a gateway node to nodes in a wireless mesh network, such that nodes in the wireless mesh network that receive transmissions from the gateway node are allocated to a first level as child nodes of the gateway node, transmitting via the first level nodes to further nodes in the wireless mesh network such that further nodes that receive transmissions from the first level nodes are allocated to a second level as child nodes of the first level nodes, and allocating non-conflicting transmission and reception time slots to the gateway node, the first level nodes and the second level nodes.

A playback node for an audio mesh network includes a wireless transceiver, circuitry coupled to the transceiver, the circuitry configured to cause the transceiver to receive audio packets from parent playback nodes and send audio packets to child playback nodes during assigned time slots, a buffer coupled to the circuitry to buffer audio packets for playback, and a speaker coupled to the circuitry to create sound from the buffered packets.

A method of distributing audio packets to playback nodes of an audio system wireless mesh network includes receiving audio at a gateway node of the wireless mesh network, transmitting audio packets to child nodes in a first level of the wireless mesh network during non-conflicting time slots, transmitting received audio packets to further child nodes in further levels of the wireless mesh network in parallel with receiving more audio packets, and buffering packets for a selected time at a buffer in each node prior to beginning playback of the audio packets.

### Brief Description of the Drawings

FIG. 1 is a block diagram of a wireless mesh audio network having parallel transmission according to an example embodiment.
FIG. 2 is a chart illustrating time slot allocation for a wireless mesh audio network according to an example embodiment.
FIG. 3 is a block diagram illustrating parent allocation for a wireless mesh audio network according to an example embodiment.
FIG. 4 is a block diagram illustrating parent allocation for a wireless mesh audio network according to an example embodiment.
FIG. 5 is a block diagram illustrating a node of a wireless mesh audio network according to an example embodiment.
FIG. 6 is a block diagram illustrating a ring buffer for a playback device for a wireless mesh audio network according to an example embodiment.
FIG. 7 is a block diagram illustrating a ring buffer receiving audio packets for playback device for a wireless mesh audio network according to an example embodiment.
FIG. 8 is a block diagram illustrating a ring buffer playing and receiving audio packets for a playback device for a wireless mesh audio network according to an example embodiment.
FIG. 9 is a block diagram illustrating a ring buffer playing and receiving audio packets for a playback device for a wireless mesh audio network according to an example embodiment.
FIG. 10 is a block diagram illustrating a block in a ring buffer having a playback flag and audio packet for a playback device for a wireless mesh audio network according to an example embodiment.
FIG. 11 is a block diagram illustrating a ring buffer having a blank or junk block for a playback device for a wireless mesh audio network according to an example embodiment.
FIG. 12 is a block diagram illustrating redundancy of packet transmission and reception for a wireless mesh audio network according to an example embodiment.
FIG. 13 is a block diagram illustrating redundancy of packet transmission and reception for a linear wireless mesh audio network according to an example embodiment.
FIG. 14 is a chart illustrating the use of multiple channels for redundancy for a wireless mesh audio network according to an example embodiment.
FIG. 15 is a block diagram of circuitry for implementing one or more functions of a wireless node in wireless mesh audio network according to an example embodiment.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media or computer readable storage device such as one or more memory or other type of hardware based storage devices, either local or networked. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

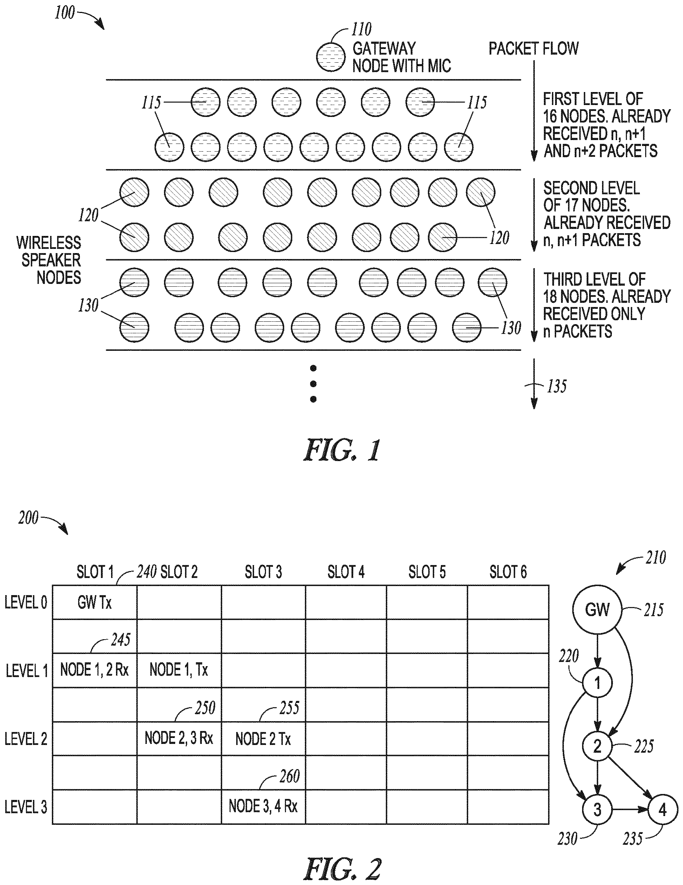

Live Audio packets are streamed across a large number of wireless speaker nodes distributed in a building reliably over a multiple hops of public address (PA) and voice annunciation (VA) systems using parallel transmission and buffers. Using a WiFi wireless mesh network 100 in FIG. 1 that includes multiple nodes and parallel transmission, there is no need to wait until an audio packet reaches a leaf node. Subsequent audio packets are pumped back to back immediately when the packets are ready. Collisions of packets from the same network sending the audio packets are avoided by intelligent allocation of time slots to each node. In other words, the visibility of a transmission is limited so that collisions are avoided.

A gateway node 110 is in a level referred to as level zero and receives audio to be transmitted to multiple nodes in a wireless mesh network. The audio may be received via microphone used by a user, or as audio files for playback in various embodiments. Gateway node 110 provides a time slot allocation to ensure that parallel transmitting time slotted nodes will not be close enough to each other so that collisions are avoided. Since the mesh is spread across the building where each hop corresponds to 20-30 feet, crossing 4 to 5 hops will be far apart for Wi-Fi visibility.

In one embodiment, nodes are allocated time slots in the order of their joining sequence. The gateway node 110 is assigned the first slot as illustrated in FIG. 2. When the gateway is turned on, the nodes only in RF range, first level nodes 115, of the Gateway can communicate with the Gateway and join the network. The first joining node will be assigned slot 3, the second joining node will be assigned slot 4 and so on. In one embodiment, for redundancy, the Gateway may be assigned two slots. Slot 1 and slot 2. The Gateway sends the same packet twice.

In some embodiments, every node will have two parents and get a chance to hear from their parents twice for the same packet but the node immediately after the gateway (Node 1) has only one parent Gateway. To receive the packet twice for the first node, the packet may be resent.

When the first level nodes 115 are added into the network and allocated time slots, they provide connectivity to the next level nodes, second level nodes 120, which will be in RF range of first level nodes, to communicate with the first level nodes 115 and join the network. Appropriate first level nodes 115 will be assigned as parents of the second level nodes 120. The complete network gets formed as nodes of all levels, third level nodes 130, fourth level nodes 135, etc., join the network by communicating with the gateway via established nodes of intermediate levels. Note that second, third, and fourth level nodes 120, 130, and 135 are not within range of the gateway node 110, so that transmissions from the gateway node 110 do not reach such levels and do not interfere with transmissions between such levels.

Time slot allocation is illustrated in block diagram form in FIG. 2 at 200 for a simplified network 210 having a gateway 215, node 1 at 220 in a first level, node 2 at 225 in a second level, and nodes 3 at 230 and 4 at 235 in a third level. Gateway 215 is assigned a first time slot for transmission at 240, nodes 1 and 2 are also assigned the first time slot for reception at 245. In level 2, nodes 2 and 3 are assigned second time slot 250 for reception, and node 2 is assigned a transmission time slot 255 in slot 3. Nodes 3 and 4 in level 3 can receive during time slot 3 as indicated at 260.

Each node may be provided with two parents by the gateway node 110. In one embodiment, the parent allocation depends on the RF signal level. The gateway node may be the only parent for first nodes Node1 and Node2. Others can have their parents from their level or a level previous to it. A node receives a packet from a primary parent in the assigned transmission (Tx) slot of the primary parent. The node receives the same packet from the secondary parent in the Tx slot of secondary parent. Every Tx is a broadcast which will be received by all children/parent of a Tx node. For example, a transmission by node 2 225 in slot 3 at 255, is received by children nodes 3 and 4 in slot 3 at 260. While node 1 is also within range of the node 2 transmission, it may ignore the transmission, as it need not listen in that slot.

Without parallel transmission, only a limited number of hops may be accommodated using a wireless mesh network of speakers. With a parallel transmission, many more hops may be accommodated, resulting in the ability to utilize a wireless mesh network in many more situations.

A brief section regarding audio compression and transmission without parallel transmission is now provided to illustrate its limitations. The quality of the audio increases with the higher sampling rate and higher bits per sample. The quality decreases with the compression. Greater the audio quality and no compression would increase payload for transmission.

A 16 KHz sampled 8bit raw audio data corresponds to 16 KB of data for 1 second of playback. An 11 KHz sampled 8bit U-Law compressed audio corresponds to 11 KB of data for 1 Sec of playback. For the above audio data around 16 KB or 11 KB of data should reach each node in the network for a live playback of the audio. This high bandwidth requirement can be easily met with Wi-Fi. Every Wi-Fi packet can carry roughly a payload of 1400 bytes. The time for the transmission of this packet from one node to another can be calculated by:
Pre transmission processing time (Includes encoding and Mic latency if any) + CSMA/CA time + Actual Air transmission time (Depends on throughput)
+ Post receive processing time (Includes decoding, PA and speaker latency) = T seconds. The packet injection time for live announcement depends on the compression technique we use and calculated from below formula:
Audio Data for 1 Sec/Max Payload that is carried in one packet = Number audio of packets. Playback Duration 1 Sec/ Number of packets required for 1 Sec = Packet Injection Time = P Sec. For the live announcement the transmission time T must be less than packet injection time P. The maximum number of hops can be calculated like below:
Packet Injection Time "P" <= Transmission Time "T" * Number of Hops "H" P/T=H number of hops.

Considering the U-Law 11 KB of audio data for 1 sec and 1400 bytes of payload of WiFi approximately 8 packets may be used for one second with each packet carrying approximately 125 mSec of audio playback.

Generally the Transmission time would sum up to 6 or 7 msec. The maximum number of hops that can be achieved with the above timings without using parallel transmission will be around 17 hops. This scale up is very small and can't even reach the midsized building where the network requirement is 50+ hops. Also the solution of many multiple small networks in the building need to be interconnected with wire and synchronization will be a difficult job.

To demonstrate parallel transmission, it is assumed that there is a two second delay between the use of the microphone or beginning of audio playback and the corresponding sound being provided by speakers at one or more of the nodes in the wireless mesh network.

Packet injection rate of audio stream using Mu-law (an algorithm utilizing compressing and expanding to improve signal to noise ratio of transmitted audio signals) 11 KB is 120 msec to generate a packet of 1400 bytes for transmission. The network should complete previous packets transmission to all nodes in Wi-Fi vicinity within 120mSec.

Consider a mesh network of 50 nodes that has one live voice channel 'X'. Packets are available for transfer at time = 120/no of streams = 120mSec. Give a slot duration of 7mSec, a maximum number of nodes separation between packets = 120/slot time = 17. The time taken for first packet x1 to reach the leaf node at 50 hops away = 50 * slot time = 350mSec

The time taken for the next packet, x2, to reach leaf node = x1+120 = 420msec. Similarly next packets x3,x4... will take 120msec from the previous packet to reach leaf node. The total number of packets of x stream buffered after initial delay 2000 = x1 + 120 * number of packets. The number of packets = (2000-350)/120 =13.

From the above calculations the first packet of audio stream will take the entire mesh depth travelling time and second packet onwards will only take 120mSec. As the system provides 2 seconds of initial delay, the delay can be used to cover the transmission delay of first packet.

Considering a network of 200 nodes, a first packet will take the number of nodes* slot time = 200*7= 1400mSec. The total number of packets buffered in the allowed initial delay of 2 secs = First packet + Second Packet..... < 2 Secs = 1400 + 120*(x2,x3,x4,x5,x6) = 1400 + 120*5 =2000 → implies 6 Packets.

In one embodiment, the gateway node allocates parents for every device in the network. The number of transmission (Tx) slots in the network is equal to the number of nodes in the network. Each node will be allocated two parents of a previous level making sure parent Tx slots happen before a corresponding child Tx slot. Nodes will also be allocated with a maximum of four children in one embodiment. In further embodiments, more or fewer children may be allocated to a parent node.

In some voice annunciation (VA) system, slots may be reused to transmit a next voice packet (without waiting for the first packet to reach the leaf node) to meet the VA bandwidth.

For an uncompressed 16 khz audio, an 8 bit mono quality audio VA packet will be available for transmission every 84 msec. Since every slot in VA system is 7msec, a first VA packet will be traversed 12 nodes (84/7 =12Tx) before the next packet is injected from gateway.

Thus there is a gap of 12 slots between each VA packet injected in to the system. The gateway node should take care that a parent node will not have its Tx slot overlapped with RX slots to receive from parents.

Once the gateway node receives a neighbor list from a node sorted in descending list of received signal strength indicator (RSSI), the gateway node will select parents based on the Algorithm: For node whose Tx slot time is less than packet injection time can select parents whose Tx happens before its Tx; for node's whose Tx slot time is greater than packet injection time parents will be allocated whose Tx happens before node Tx except a parent node whose Tx is equal to (Node's slot number) - (Packet Injection time/ slot time).

In one embodiment, a gateway slot management (GSM) function running on the gateway allocates the slots to each node. The algorithm considers the following points to allocate a slot:
1. The RSSI level of neighboring nodes.
2. The maximum number of child nodes for any parent node.
3. The level of the node.
4. The Tx and Rx overlapping slots for parallel transmission.

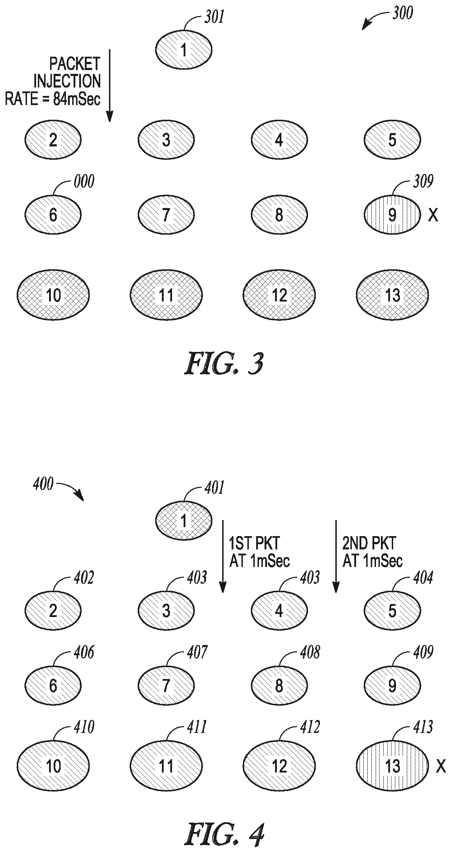

FIG. 3 illustrates an example 300 of parent allocation in accordance with the above formula. A gateway node is indicated at 301. A ninth node at 309 has a slot 9. It's Tx slot time will be 9*7 = 63 msec, which is less than the packet injection rate and time of (84 msec). Thus the gateway node 301 can sleect any node whose Tx happens before that time as its parent. Nodes having the same size in FIG. 3 are candidates.

FIG. 4 illustrates an example 400 of parent allocation in accordance with the above formula. A gateway node is indicated at 401. A thirteenth node at 413 has a slot 13. It's Tx slot time will be 13*7 = 91 msec, which is more than the packet injection rate and time (84 msec). Thus the gateway node 401 cannot select a node whose Tx is equal to 13-84/7 = 1. Node 413 can only have nodes 402, 403, 404, 405, 406, 407, 408, 409, 410, 411, and 412 as a parent.

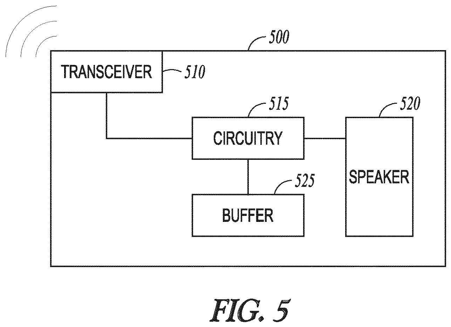

A node 500 is shown in block diagram form in FIG. 5. Node 500 is a device that contains a transceiver 510 for receiving and transmitting packets during assigned time slots in accordance with a wireless communications protocol such as WiFi. Circuitry 515, converts the packets into an audio signal that can be played via a speaker 520. Each node in some embodiments may function as a playback device, or only selected nodes function as a playback device in further embodiments.

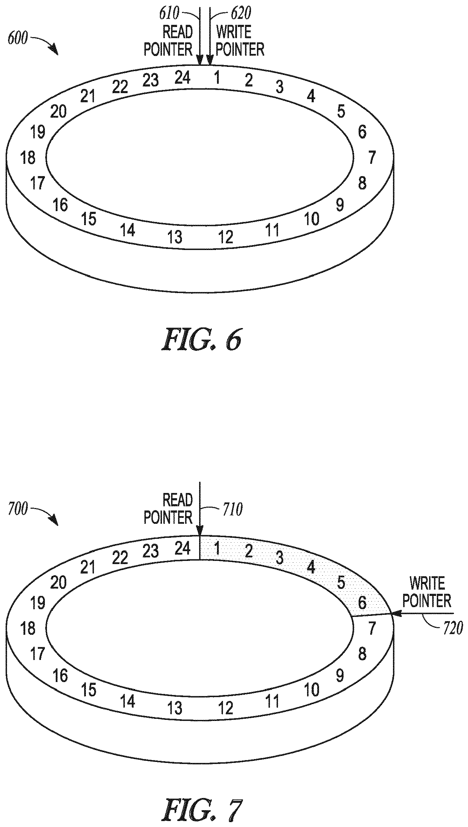

In one embodiment, the audio packets contain a serial number which may be copied into a circular buffer 525 in playback device 500. The circular buffer is shown graphically at 600, 700, 800, and 900 respectively in FIGs. 6, 7, 8, and 9 in various stages of audio reception and playback. Buffer 600 corresponds to the state of the buffer prior to audio reception. Buffer 700 corresponds to the state of the buffer after 500 msec of audio reception. Buffer 800 corresponds to a buffer where audio playback is triggered. Buffer 900 corresponds to a buffer after 200 msec of audio playback and receiving simultaneously.

Circular buffer 525 is big enough to hold two seconds of audio data in one embodiment. The buffer size = Audio payload size * Number of packets required for two seconds of playback. Different size buffers may be used corresponding longer or shorter playback buffering in further embodiments. Two seconds is selected as an example that seems to work in many audio system settings.

(Example: 16kHz sampling rate at 8bit with maximum audio payload of 1.4kB. 32kB = 1.4kB * 24) The buffer is filled in blocks based on the sequence number of the packet. There are 24 blocks after which the buffer starts overwriting. If there is a packet miss then that block is left unfilled. Block No = (Pkt Seq No.) % (No. of blocks). Packet = MAC Headers + Timestamp + Aud Seq no. + Audio Data + Trigger / Health info.

As illustrated in FIG. 6, initial read and write pointers 610 and 620 respectively are pointing to the start of the buffer 600 before audio reception.

Once the packets start being received, the write pointer will be pointing to an end of the highest sequence numbered received packet block as illustrated in FIG. 7, where a read pointer 710 is still at the start of the buffer, and a write pointer 720 is pointing to block 7. Buffer 700 corresponds to the state of the buffer after 500 msec of audio reception.

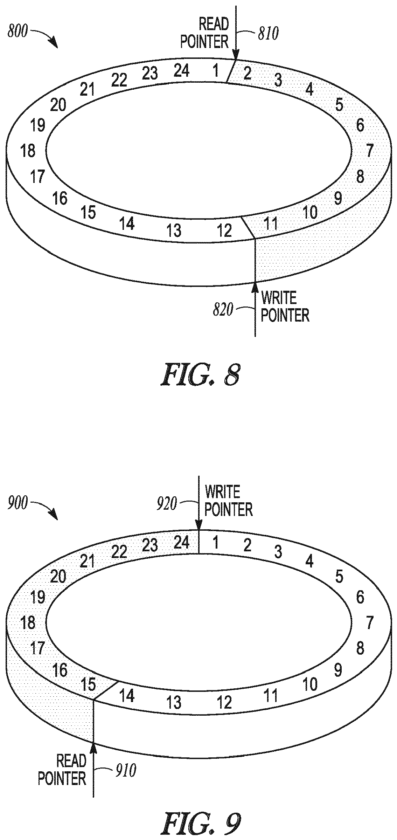

The read pointer corresponds to the audio playback, once the audio playback is triggered it starts the playback from that pointer and keeps updating the read pointer. If a packet is received with sequence number less than the previously received packets, only the audio data is updated in the corresponding block not the write pointer. An audio trigger event may be supplied from the gateway in a timestamp format for all the nodes along with audio data well before the trigger time. The audio trigger may be repeated for redundancy. Buffer 800 in FIG. 8 corresponds to a buffer where audio playback is triggered, with a read pointer 810 pointing to the second block, and a write pointer 820 pointing to a twelfth block.

Buffer 900 in FIG. 9 corresponds to a buffer after 200 msec of audio playback and receiving simultaneously. A read pointer 910 is pointing to the fifteenth block, and a write pointer 920 is pointing back at a first block of the circular buffer.

In one embodiment, all the nodes including the gateway will have a common synchronized time. The gateway node is the distributer of the time and other nodes will sync to it through their parent nodes. The time may be distributed at regular intervals to keep the complete network synchronized.

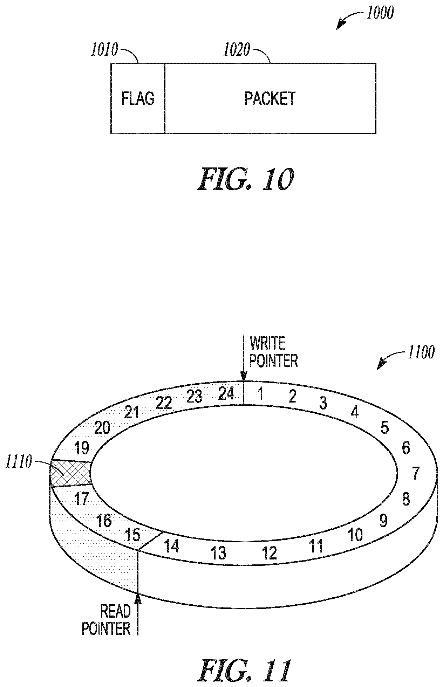

A block of data in the playback buffer is indicated in block diagram form at 1000 in FIG. 10. The playback buffer in one embodiment keeps a flag 1010 to each block to indicate the playback of the block, which also includes the packet 1020. If the block 1000 is read and played back then the playback flag 1010 will be set until this block gets filled with the fresh packet 1020. With the audio trigger all the playback devices start playing from the start of the buffer hence maintaining the sync between the speakers.

FIG. 11 is a block diagram of a circular buffer 1100 having a missing or junk block 1110 among the blocks. When there is a packet miss it creates an empty block 1110 in the circular buffer 1100 with no/previous audio data. To avoid playing the junk / previous audio data, the playback flag 1010 may be used. If the playback is completed for this block, or the block contains bad data, the playback flag 1010 is used to indicate that a "silence buffer block" with silence audio should be played to smooth the audio. This will avoid the unexpected audio burst during the audio playback caused be the packet miss. The silence buffer block may be inserted into the buffer 1100 at 1110, or may simply be substituted for the packet residing at 1110 during playback.

Redundancy from neighboring nodes utilizes the Tx of neighbor nodes to child nodes to increase successful packet reception in a voice alarm mode. In the voice alarm mode, all network nodes are always awake and in receive mode and can listen to packets from all nodes which are in range including parents.

Nodes will use the time left after listening on allocated Rx slots from parents, to receive the same packet from neighbor nodes that are transmitting to their child nodes. In alarm mode, a node after receiving packets from parents in an allocated Rx slot, will remain awake on a primary channel and will receive packets from neighbor nodes (not parents).

Nodes then compare the received packet for the sequence number if the packet was already received, as indicated by having received a packet previously with the same sequence number, the node will discard the packet. Otherwise the node will put the received packet to the audio playback circular buffer at the position identified by adjacent packet sequence numbers in the queue.

The use of such redundancy from neighboring nodes provides additional network reliability during the alarm mode, as a node need not rely only on parents transmissions to receive the packet.

A node can also receive the packet from its children if the node failed to receive the packet from parents. A child node may have received the packet from a secondary parent. The child node may then transmit to its children in its Tx slots. Nodes can receive these packets (from children) and check the sequence number of the packet. If packet is not already received then node will place it in the audio play back queue.

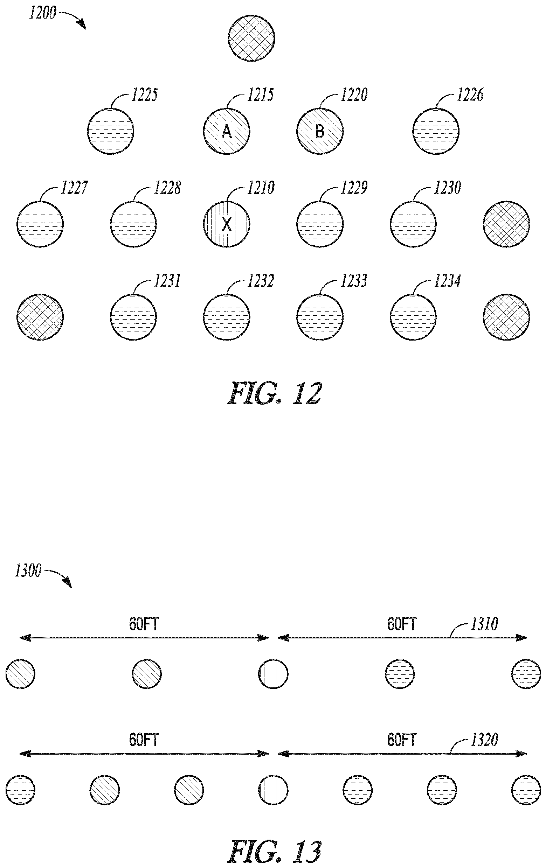

As shown in below FIG. 12 below, nodes are represented as circles at 1200. A node 1210 has parent nodes labeled A and B at 1215 and 1220 respectively. Node 1210 receives the same packet not just from parents but all nodes in its range, indicated at 1225, 1226, 1227, 1225, 1228, 1229, 1230, 1221, 1232, and 1233, which may include its child nodes.

FIG. 13 is a diagram illustrating two linear deployments of nodes at 1300 and 1310. In deployment 1300, nodes are separated by about 30 feet. This may result in a node only being able to communicate with one parent node and one child node adjacent to it, leaving no additional nodes for redundancy. In one embodiment, as shown in linear deployment 1310, the distance between nodes has been decreased such that a node can receive from or transmit two multiple nodes on either side of it in the linear deployment, allowing for redundancy. Thus, each node with minimized distance of separation can receive and transmit to at least one neighbor as well as a parent and a child. Note that the distances shown may vary as networking capabilities improve or different communication protocols are employed.

In one embodiment, the transceiver 510 in each node may be provided with two channels, such as one channel in a 5 GHz band and another channel in a 2.4 GHz band. Nodes may transmit data in the first assigned slot in one frequency channel, a primary channel, and retransmit the same data in the second assigned slot in a different frequency channel, a secondary channel.

Nodes will have consecutive Tx slots. Each slot is 7 msec long, so every node in the network will have one combined slot of 14 msec in which it does two transmissions on two different allocated channels. Since every packet is transmitted by a node on both primary and secondary channels, a receive node will get the opportunity for a successful reception in case of high interference in any one of the channels.

Receiving the same packet on secondary channel is optional. Nodes in one embodiment will only receive the packet on the secondary channel if it fails to receive the packet on primary channel.

The use of two channels in this manner provides four link redundancies between parents. Two links on a primary channel from two parents, and two links on the secondary channel from the same two parents. In addition, eight packet retries may also be utilized.

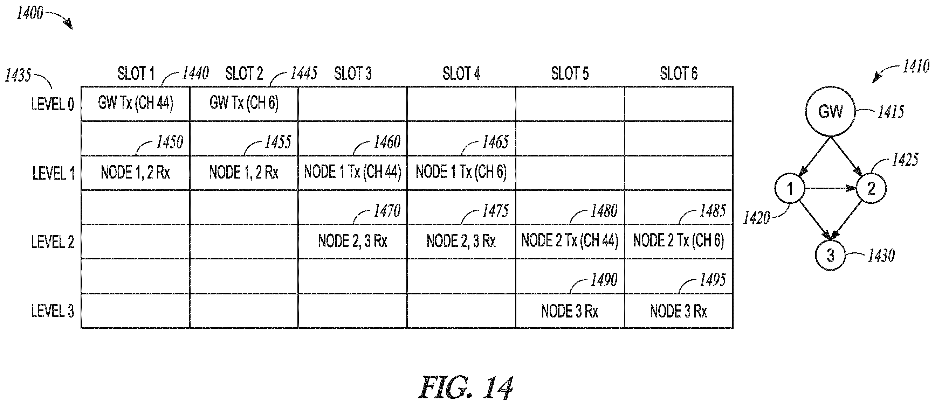

FIG. 14 illustrates the use of two consecutive slots on primary and secondary channels generally at 1400. A simply network of nodes is illustrated at 1410 with a gateway node 1415, nodes 1 and 2 at 1420 and 1425 in a first level, and node 3 at 1430 at a second level. A chart of slots 1435 is illustrated with each slot indicating the node, transmit or receive, and a channel. Receiver nodes periodically monitor the secondary channel since receipt on the secondary channel may be optional and used when packets are missed on the primary channel. At level zero, slot 1 at 1440 is used by the gateway node 1415 to transmit on a primary channel indicated as (Ch 44). Slot 2 at 1445 is used by the gateway node 1415 to transmit on the secondary channel indicated as (Ch 6).

In level one, slot 1 at 1450 is used to receive by nodes 1 and 2 at 1420 and 1425 on the primary channel. Slot 2 at 1455 is also used by nodes 1 and 2 at 1420 and 1425 to receive from the secondary channel. Slot 3 at 1460 is used by node 1 to transmit on the primary channel and slot 4 at 1460 is used by node 1 to transmit on the secondary channel.

In level 2, slot 3 at 1470 is used to receive by nodes 2 and 3 on the primary channel, and slot 4 at 1475 is used to receive by nodes 2 and 3 on the secondary channel. Slot 5 at 1480 is used by node 2 to transmit on the primary channel and slot 6 at 1485 is used by node 2 to transmit on the secondary channel. In level 3, slot 5 is used by node 3 (1430) to receive on the primary channel and slot 6 at 1495 is used to receive on the secondary channel.

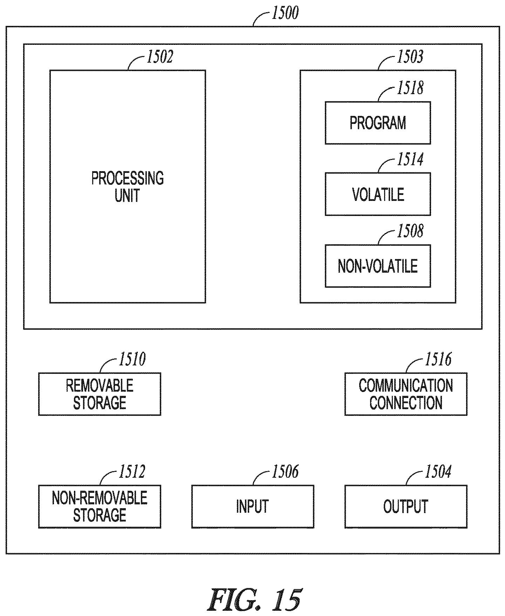

FIG. 15 is a block schematic diagram of a computer system 1500 to implement methods according to example embodiments. All components need not be used in various embodiments. One example computing device in the form of a computer 1500, may include a processing unit 1502, memory 1503, removable storage 1510, and non-removable storage 1512. Although the example computing device is illustrated and described as computer 1500, the computing device may be in different forms in different embodiments. For example, the computing device may instead be a smartphone, a tablet, smartwatch, or other computing device including the same or similar elements as illustrated and described with regard to FIG. 15. Devices such as smartphones, tablets, and smartwatches are generally collectively referred to as mobile devices. Further, although the various data storage elements are illustrated as part of the computer 1500, the storage may also or alternatively include cloud-based storage accessible via a network, such as the Internet.

Memory 1503 may include volatile memory 1514 and non-volatile memory 1508. Computer 1500 may include - or have access to a computing environment that includes - a variety of computer-readable media, such as volatile memory 1514 and non-volatile memory 1508, removable storage 1510 and non-removable storage 1512. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 1500 may include or have access to a computing environment that includes input 1506, output 1504, and a communication connection 1516. Output 1504 may include a display device, such as a touchscreen, that also may serve as an input device. The input 1506 may include one or more of a touchscreen, touchpad, mouse, keyboard, camera, one or more device-specific buttons, one or more sensors integrated within or coupled via wired or wireless data connections to the computer 1500, and other input devices. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable medium are executable by the processing unit 1502 of the computer 1500. A hard drive, CD-ROM, and RAM are some examples of articles including a non-transitory computer-readable medium such as a storage device. The terms computer-readable medium and storage device do not include carrier waves. For example, a computer program 1518 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 1500 to provide generic access controls in a COM based computer network system having multiple users and servers.

### Examples

1. A method of assigning nodes and time slots in a wireless audio node mesh network, the method comprising:
   transmitting via a gateway node to nodes in a wireless mesh network, such that nodes in the wireless mesh network that receive transmissions from the gateway node are allocated to a first level as child nodes of the gateway node;
   transmitting via the first level nodes to further nodes in the wireless mesh network such that further nodes that receive transmissions from the first level nodes are allocated to a second level as child nodes of the first level nodes; and
   allocating non-conflicting transmission and reception time slots to the gateway node, the first level nodes and the second level nodes.
2. The method of example 1 and further comprising sequentially transmitting at successive levels and adding receiving nodes as child nodes in each added level until all nodes in the wireless mesh network have been allocated to a level and have been allocated non-conflicting transmission and reception time slots.
3. The method of any of examples 1-2 wherein each node is allocated a primary parent node from a previous level of the network.
4. The method of example 3 wherein nodes are allocated a secondary parent node from the previous level of the network.
5. The method of any of examples 1-4 wherein nodes are allocated a child node in a succeeding level of the network.
6. The method of example 5 wherein nodes are allocated a further child node in the succeeding level of the network.
7. The method of any of examples 5-6 wherein nodes are allocated further transmit and receive time slots on a secondary channel and further comprising periodically transmitting a time via the gateway node to synchronize clocks of the nodes.
8. A playback node for an audio mesh network, the playback node comprising:
   a wireless transceiver;
   circuitry coupled to the transceiver, the circuitry configured to cause the transceiver to receive audio packets from parent playback nodes and send audio packets to child playback nodes during assigned time slots;
   a buffer coupled to the circuitry to buffer audio packets for playback; and
   a speaker coupled to the circuitry to create sound from the buffered packets.
9. The playback node of example 8 wherein the buffer comprises a circular buffer having storage locations for multiple blocks of data.
10. The playback node of example 9 wherein the buffer comprises a read pointer and a write pointer that indicate current read and write positions for playback and receipt of further packets respectively.
11. The playback node of any of examples 9-10 wherein each block of data comprises an audio packet and a playback flag.
12. The playback node of example 11 wherein the circuitry is configured to read the playback flag and play the audio packet via the speaker or a blank audio packet depending on the status of the playback flag.
13. The playback node of any of examples 8-12 wherein the transceiver comprises a two channel transceiver to transmit on a primary channel and a secondary channel during different time slots under control of the circuitry.
14. The playback node of example 13 wherein an audio packet is received via the secondary channel if the packet was not received via the primary channel as determined by a packet sequence number in the packet.
15. A method of distributing audio packets to playback nodes of an audio system wireless mesh network, the method comprising:
   receiving audio at a gateway node of the wireless mesh network;
   transmitting audio packets to child nodes in a first level of the wireless mesh network during non-conflicting time slots;
   transmitting received audio packets to further child nodes in further levels of the wireless mesh network in parallel with receiving more audio packets; and
   buffering packets for a selected time at a buffer in each node prior to beginning playback of the audio packets.
16. The method of example 15 and further comprising transmitting an audio trigger event to each node to synchronize playback of the audio packets by the nodes, wherein audio packets are received twice at the first level nodes of the wireless mesh network.
17. The method of any of examples 15-16 and further comprising:
   playing the audio packets from the buffer in each node responsive to the audio trigger event; and
   receiving the audio packets from child nodes in addition to parent nodes when the child nodes transmit packets received from a different parent node to their child nodes.
18. The method of example 17 wherein each audio packet in the buffer has an associated playback flag.
19. The method of example 18 wherein the buffer is a circular buffer and the playback flag is indicative of the packet having been previously played.
20. The method of example 18 wherein the playback flag is indicative of the packet being corrupted, the method further comprising playing a blank or silence audio packet when the flag is indicative of the packet being corrupted.

In one embodiment, a method selects nodes for zonal announcement based on its location based on its unique wireless address. The announcement can be made to only a specific zone or simultaneous message announcement to two different zones.

In a further embodiment, a method includes mapping each individual speaker node to a bit in the audio trigger packet to send audio playback enable or disable. The method of connecting to an individual speaker node may include using the unique wireless address from the mobile phone/computer for diagnostics.

In a further embodiment, a method of initiating an announcement from any speaker node may be done from a connected mobile phone or computer, where the MIC in these devices is used to capture the audio and transmit to the connected speaker node and hence forwarded to the mesh network.

In yet a further embodiment, a method of bidirectional packet transmission between the parent and child nodes enables the audio announcement from any connected node.

A Synchronous audio announcement may be achieved across the mesh network in the complete building with selective zonal and individual speaker announcements.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

The speaker nodes for announcement can be selected dynamically using their unique address (Mac address or IP address) in a specific zone so that the Zone specific announcement can be made in that zone.

Using two simultaneous audio streams we can make the two simultaneous announcements to two different zones.

A mobile phone application that can connect to individual speaker node using its unique wireless address and perform diagnostics.

Not all the announcements are required to be initiated from the Gateway node, we can use the Mobile phone app and connect to one of the node and start streaming the audio to the required speaker nodes. This can be enabled using bidirectional audio transmission where the transmission can happen from child nodes to parent nodes.

To enable the each node for announcement, Each node with its unique address is mapped to a bit in the audio trigger packet similar to TIM(Traffic indication map for each stations in WiFi). The audio trigger packet along with the audio trigger time carries this bit information for playback on each nodes.

Each node will start the audio announcement only after checking their bit in the trigger packet. Using this bit information and a local building map we can select the individual nodes, or a zone of nodes, or all the nodes for announcements.

## Claims

1. A playback node (500) for an audio mesh network (100, 210) comprising a plurality of playback nodes, the playback node (500) comprising:
a wireless transceiver (510);
circuitry (515) coupled to the transceiver (510), the circuitry configured to cause the transceiver (510) to receive audio packets (1000) from parent playback nodes and send audio packets to child playback nodes during assigned time slots;
a buffer (525) coupled to the circuitry (515) to buffer audio packets (1020) for playback; and
a speaker (520) coupled to the circuitry (515) to create sound from the buffered (audio) packets;
wherein the circuitry is configured to receive an audio trigger event to synchronize playback of the audio packets by the playback nodes (114, 220, 120, 130, 225, 230, 235), and to play the audio packets from the buffer responsive to the audio trigger event.

2. The playback node (500) of claim 1 wherein the buffer comprises a circular buffer (600, 700, 800, 900) having storage locations for multiple blocks of data and wherein the buffer comprises a read pointer (610, 710, 810, 910) and a write pointer (620, 720, 820, 920) that indicate current read and write positions for playback and receipt of further audio packets (1000) respectively.

3. The playback node (500) of claim 2 wherein each block of data comprises an audio packet (1020) and a playback flag (1010) and wherein the circuitry (515) is configured to read the playback flag (1010) and play the audio packet (1020) via the speaker (520) or a blank audio packet (1020) depending on the status of the playback flag (1010).

4. The playback node (500) of any one of claims 1 to 3, wherein the transceiver (510) comprises a two-channel transceiver to transmit on a primary channel and a secondary channel during different time slots under control of the circuitry (515) and wherein an audio packet (1020) is received via the secondary channel if the audio packet was not received via the primary channel as determined by a packet sequence number in the audio packet.

5. A method of distributing audio packets (1020) to playback nodes (115, 220, 120, 225, 230, 235) of an audio system wireless mesh network (100, 210), the method comprising:
receiving audio at a gateway node (110, 215) of the wireless mesh network (100, 210);
transmitting audio packets (1020) from the gateway node to child playback nodes (115, 220) in a first level of the wireless mesh network during non-conflicting time slots;
transmitting received audio packets from the child playback nodes (115, 220) to further child playback nodes (120, 225, 230, 235) in further levels of the wireless mesh network in parallel with receiving more audio packets (1020) at the child playback nodes (115, 220) of the first level of the wireless mesh network;
buffering audio packets for a selected time at a buffer (525) in each playback node (115, 220, 120, 225, 230, 235) prior to beginning playback of the audio packets; and
transmitting an audio trigger event to each playback node (115, 220, 120, 225, 230, 235) in the wireless mesh network (100, 210) to synchronize playback of the audio packets (1020) by the playback nodes, and playing the audio packets from the buffer (525) in each playback node in the wireless mesh network responsive to the audio trigger event.

6. The method of claim 5, wherein audio packets (1020) are received twice at the first level child playback nodes (115, 220) of the wireless mesh network (100, 210).

7. The method of claim 5 or claim 6, further comprising:
receiving the audio packets (1020) from child playback nodes in addition to parent playback nodes when the child playback nodes transmit packets received from a different parent playback node to their child playback nodes.

8. The method of claim 7 wherein each audio packet (1020) in the buffer has an associated playback flag (1010).

9. The method of claim 8 wherein the buffer is a circular buffer (600, 700, 800, 900) and the playback flag (1010) is indicative of the packet (1020) having been previously played and wherein the playback flag (1010) is indicative of the audio packet (1020) being corrupted, the method further comprising playing a blank or silence audio packet when the flag (1010) is indicative of the packet being corrupted.

## Patentansprüche

1. Wiedergabeknoten (500) für ein vermaschtes Audionetzwerk (100, 210), das eine Mehrzahl von Wiedergabeknoten umfasst, wobei der Wiedergabeknoten (500) umfasst:
einen drahtlosen Sendeempfänger (510);
Schaltungsanordnung (515), die mit dem Sendeempfänger (510) gekoppelt ist, wobei die Schaltungsanordnung so konfiguriert ist, dass sie den Sendeempfänger (510) veranlasst, während zugewiesener Zeitschlitze Audiopakete (1000) von übergeordneten Wiedergabeknoten zu empfangen und Audiopakete an untergeordnete Wiedergabeknoten zu senden;
einen Puffer (525), der mit der Schaltungsanordnung (515) gekoppelt ist, um Audiopakete (1020) zur Wiedergabe zu puffern; und
einen Lautsprecher (520), der mit der Schaltungsanordnung (515) gekoppelt ist, um Ton aus den gepufferten (Audio-) Paketen zu erzeugen;
wobei die Schaltungsanordnung so konfiguriert ist, dass sie ein Audioauslöseereignis empfängt, um Wiedergabe der Audiopakete durch die Wiedergabeknoten (114, 220, 120, 130, 225, 230, 235) zu synchronisieren und die Audiopakete aus dem Puffer in Reaktion auf das Audioauslöseereignis wiederzugeben.

2. Wiedergabeknoten (500) nach Anspruch 1, wobei der Puffer einen Ringpuffer (600, 700, 800, 900) mit Speicherplätzen für mehrere Datenblöcke umfasst, und wobei der Puffer einen Lesezeiger (610, 710, 810, 910) und einen Schreibzeiger (620, 720, 820, 920) umfasst, die aktuelle Lese- und Schreibpositionen für Wiedergabe bzw. Empfang weiterer Audiopakete (1000) anzeigen.

3. Wiedergabeknoten (500) nach Anspruch 2, wobei jeder Datenblock ein Audiopaket (1020) und ein Wiedergabeflag (1010) umfasst, und wobei die Schaltungsanordnung (515) so konfiguriert ist, dass sie das Wiedergabeflag (1010) liest und in Abhängigkeit vom Status des Wiedergabeflags (1010) das Audiopaket (1020) über den Lautsprecher (520) oder ein leeres Audiopaket (1020) wiedergibt.

4. Wiedergabeknoten (500) nach einem der Ansprüche 1 bis 3, wobei der Sendeempfänger (510) einen Zweikanal-Sendeempfänger zum Senden auf einem primären Kanal und einem sekundären Kanal während verschiedener Zeitschlitze unter der Kontrolle der Schaltungsanordnung (515) umfasst, und wobei ein Audiopaket (1020) über den sekundären Kanal empfangen wird, wenn das Audiopaket nicht über den primären Kanal empfangen wurde, wie durch eine Paketreihenfolgenummer im Audiopaket bestimmt.

5. Verfahren zur Verteilung von Audiopaketen (1020) an Wiedergabeknoten (115, 220, 120, 225, 230, 235) eines vermaschten drahtlosen Audiosystemnetzwerks (100, 210), wobei das Verfahren umfasst:
Empfangen von Audio an einem Gateway-Knoten (110, 215) des vermaschten drahtlosen Netzwerks (100, 210);
Senden von Audiopaketen (1020) vom Gateway-Knoten an untergeordnete Wiedergabeknoten (115, 220) auf einer ersten Ebene des vermaschten drahtlosen Netzwerks während konfliktfreier Zeitschlitze;
Senden von empfangenen Audiopaketen von den untergeordneten Wiedergabeknoten (115, 220) an weitere untergeordnete Wiedergabeknoten (120, 225, 230, 235) auf weiteren Ebenen des vermaschten drahtlosen Netzwerks parallel zum Empfangen von mehr Audiopaketen (1020) an den untergeordneten Wiedergabeknoten (115, 220) der ersten Ebene des vermaschten drahtlosen Netzwerks;
Puffern von Audiopaketen für einen ausgewählte Zeit an einem Puffer (525) in jedem Wiedergabeknoten (115, 220, 120, 225, 230, 235) vor Beginn der Wiedergabe der Audiopakete; und
Senden eines Audioauslöseereignisses an jeden Wiedergabeknoten (115, 220, 120, 225, 230, 235) im vermaschten drahtlosen Netzwerk (100, 210), um Wiedergabe der Audiopakete (1020) durch die Wiedergabeknoten zu synchronisieren, und Wiedergeben der Audiopakete aus dem Puffer (525) in jedem Wiedergabeknoten im vermaschten drahtlosen Netzwerk in Reaktion auf das Audioauslöseereignis.

6. Verfahren nach Anspruch 5, wobei Audiopakete (1020) an den untergeordneten Wiedergabeknoten (115, 220) der ersten Ebene des vermaschten drahtlosen Netzwerks (100, 210) zweimal empfangen werden.

7. Verfahren nach Anspruch 5 oder 6, ferner umfassend:
Empfangen der Audiopakete (1020) von untergeordneten Wiedergabeknoten zusätzlich zu übergeordneten Wiedergabeknoten, wenn die untergeordneten Wiedergabeknoten Pakete, die von einem verschiedenen übergeordneten Wiedergabeknoten empfangen werden, an ihre untergeordneten Wiedergabeknoten senden.

8. Verfahren nach Anspruch 7, wobei jedes Audiopaket (1020) im Puffer ein assoziiertes Wiedergabeflag (1010) aufweist.

9. Verfahren nach Anspruch 8, wobei der Puffer ein Ringpuffer (600, 700, 800, 900) ist, und das Wiedergabeflag (1010) das Paket (1020) anzeigt, das vorher wiedergegeben wurde, und wobei das Wiedergabeflag (1010) das Audiopaket (1020) anzeigt, das beschädigt ist, wobei das Verfahren ferner ein Wiedergeben eines leeren oder stummen Audiopakets umfasst, wenn das Flag (1010) das Paket anzeigt, das beschädigt ist.

## Revendications

1. Noeud de reproduction (500) pour un réseau audio maillé (100, 210) comprenant une pluralité de noeuds de reproduction, le noeud de reproduction (500) comprenant :
un émetteur récepteur sans fil (510),
des circuits (515) couplés à l'émetteur récepteur (510), les circuits étant configurés pour amener l'émetteur récepteur (510) à recevoir des paquets audio (1000) provenant de noeuds de reproduction parents et pour envoyer des paquets audio à des noeuds de reproduction enfants pendant des tranches de temps assignées,
une mémoire tampon (525) couplée aux circuits (515) pour mettre en tampon des paquets audio (1020) en vue d'une reproduction, et
un haut-parleur (520) couplé aux circuits (515) destiné à créer un son à partir des paquets (audio) mis en tampon,
dans lequel les circuits sont configurés pour recevoir un événement audio de déclenchement afin de synchroniser la reproduction des paquets audio par les noeuds de reproduction (114, 220, 120, 130, 225, 230, 235) et de jouer les paquets audio à partir de la mémoire tampon en réponse à l'événement audio de déclenchement.

2. Noeud de reproduction (500) selon la revendication 1, dans lequel la mémoire tampon comprend une mémoire tampon circulaire (600, 700, 800, 900) comportant des emplacements de stockage pour de multiples blocs de données, et où la mémoire tampon comprend un pointeur de lecture (610, 710, 810, 910) et un pointeur d'écriture (620, 720, 820, 920) qui indiquent respectivement les positions courantes de lecture et d'écriture pour la reproduction et la réception d'autres paquets audio (1000).

3. Noeud de reproduction (500) selon la revendication 2, dans lequel chaque bloc de données comprend un paquet audio (1020) et un drapeau de reproduction (1010), et où les circuits (515) sont configurés pour lire le drapeau de reproduction (1010) et restituer le paquet audio (1020) au travers du haut-parleur (520), ou bien un paquet audio (1020) formant un blanc en fonction de l'état du drapeau de reproduction (1010).

4. Noeud de reproduction (500) selon l'une quelconque des revendications 1 à 3, dans lequel l'émetteur récepteur (510) comprend un émetteur récepteur à deux voies dans le but de transmettre sur une voie principale et une voie secondaire pendant différentes tranches de temps sous le contrôle des circuits (515), et où un paquet audio (1020) est reçu au travers de la voie secondaire si le paquet audio n'a pas été reçu au travers de la voie principale comme cela est déterminé par un numéro de séquence de paquets dans le paquet audio.

5. Procédé de répartition de paquets audio (1020) vers des noeuds de reproduction (115, 220, 120, 225, 230, 235) d'un réseau maillé sans fil (100, 210) de système audio, le procédé comprenant :
la réception d'un signal audio au niveau d'un noeud de passerelle (110, 215) du réseau maillé sans fil (100, 210),
la transmission de paquets audio (1020) provenant du noeud de passerelle à des noeuds de reproduction (115, 220) dans un premier niveau du réseau maillé sans fil pendant des tranches de temps sans conflit,
la transmission de paquets audio reçus en provenance des noeuds de reproduction enfants (115, 220) vers d'autres noeuds de reproduction enfants (120, 225, 230, 235) dans d'autres niveaux du réseau maillé sans fil parallèlement à la réception de paquets audio (1020) supplémentaires au niveau des noeuds de reproduction enfants (115, 220) du premier niveau du réseau maillé sans fil,
la mise en tampon de paquets audio pendant une durée sélectionnée au niveau d'une mémoire tampon (525) dans chaque noeud de reproduction (115, 220, 120, 225, 230, 235) avant de démarrer la reproduction des paquets audio, et
la transmission d'un événement audio de déclenchement à chaque noeud de reproduction (115, 220, 120, 225, 230, 235) dans le réseau maillé sans fil (100, 210) afin de synchroniser la reproduction des paquets audio (1020) par les noeuds de reproduction, et la reproduction des paquets audio à partir de la mémoire tampon (525) dans chaque noeud de reproduction dans le réseau maillé sans fil en réponse à l'événement audio de déclenchement.

6. Procédé selon la revendication 5, dans lequel les paquets audio (1020) sont reçus deux fois sur les noeuds de reproduction enfants (115, 200) du premier niveau du réseau maillé sans fil (100, 210).

7. Procédé selon la revendication 5 ou la revendication 6, comprenant en outre :
la réception des paquets audio (1020) provenant de noeuds de reproduction enfants en addition aux noeuds de reproduction parents lorsque les noeuds de reproduction enfants transmettent à leurs noeuds de reproduction enfants des paquets reçus d'un noeud de reproduction parent différent.

8. Procédé selon la revendication 7, dans lequel chaque paquet audio (1020) dans la mémoire tampon comporte un drapeau de reproduction (1010) associé.

9. Procédé selon la revendication 8, dans lequel la mémoire tampon est une mémoire tampon circulaire (600, 700, 800, 900) et où le drapeau de reproduction (1010) indique le paquet (1020) qui a été joué auparavant, et où le drapeau de reproduction (1010) indique le paquet audio (1020) corrompu, le procédé comprenant en outre la reproduction d'un paquet audio formant un blanc ou un silence lorsque le drapeau (1010) indique le paquet corrompu.
